(19) Europäisches Patentamt
European Patent Office
Office européen des brevets

(11) EP 0 651 947 B1

(12) **EUROPEAN PATENT SPECIFICATION**

(45) Date of publication and mention of the grant of the patent:
**29.09.1999 Bulletin 1999/39**

(51) Int. Cl.$^6$: **A23D 9/013**, A23G 1/00, A23G 3/00

(21) Application number: **94303293.8**

(22) Date of filing: **06.05.1994**

(54) **Reduced calorie cocoa butter substitutes**

Kalorienarmer Kakaobutterersatz

Substituts réduits en calories du beurre de cacao

(84) Designated Contracting States:
**AT BE CH DE DK ES FR GB GR IE IT LI NL PT SE**

(30) Priority: **09.11.1993 US 145831**

(43) Date of publication of application:
**10.05.1995 Bulletin 1995/19**

(73) Proprietors:
- **ARCO Chemical Technology, L.P.**
  **Greenville, Delaware 19807 (US)**
- **Bestfoods**
  **Englewood Cliffs, NJ 07632 (US)**

(72) Inventors:
- **Cooper, Charles F.**
  **Paoli, Pennsylvania 19301 (US)**
- **Ormsbee, Richard A.**
  **North Plainfield, New Jersey 07062 (US)**
- **Sekula, Bernard C.**
  **High Bridge, New Jersey 08829 (US)**
- **Tancibok, Krystyna U.**
  **Union, New Jersey 07083 (US)**

(74) Representative:
**Cropp, John Anthony David et al**
**MATHYS & SQUIRE**
**100 Grays Inn Road**
**London, WC1X 8AL (GB)**

(56) References cited:
**EP-A- 0 350 981** **EP-A- 0 571 218**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Xerox (UK) Business Services
2.16.7/3.6

## Description

This invention relates to fatty acid-esterified propoxylated glycerin compositions which are useful as reduced calorie substitutes for cocoa butter in food products such as chocolate and other confectioneries.

BACKGROUND OF THE INVENTION:

Cocoa butter is a natural fat derived by hydraulic or expeller pressing or by solvent extraction of cocoa beans. The unique melting behavior of cocoa butter makes it highly desirable for use in chocolate and similar food products. Unlike other triglycerides obtained from natural sources, cocoa butter exhibits a distinct brittle fracture below 20°C (68°F), a fairly sharp and complete melting point at about 35°C (95°F) with an incipient fusion or softening around 30-32°C (86-90°F). A chocolate product comprising cocoa butter thus is solid at room temperature but when consumed melts rapidly at body temperature to provide excellent non-waxy mouthfeel and consistency.

The unique physical properties of cocoa butter are attributable to the particular combination and positional distribution of fatty acid acyl groups on the three carbons of glycerol. Cocoa butter contains approximately equimolar proportions of three major fatty acid acyl groups (palmitate, stearate, oleate), but only three major molecular species despite the possibility of many additional combinations of the dominant fatty acids. Apparently the enzymes present in the maturing cocoa beans are capable of selectively producing these major species.

As natural cocoa butter is relatively expensive compared to other more readily available lipids, considerable effort has been devoted to developing economical processes for synthesizing triglycerides having melting properties analogous to cocoa butter. This objective has proven to be quite difficult to accomplish owing to the inability of conventional esterification methods to position the necessary fatty acid acyl groups regioselectively (i.e., at particular carbon atoms of the glycerol).

The processing of cocoa butter into acceptable confectionery products is complicated by the fact that cocoa butter can exist in several different crystalline forms. As certain of these crystalline forms are unstable, products containing cocoa butter must be carefully tempered and/or seeded to give a smooth crystalline solid of the desired firmness and mouthfeel which will keep satisfactorily without discoloration or bloom.

Bloom is a separation of fat crystals from the matrix of a cocoa butter-containing composition, generally caused by the extrusion or recrystallization of the cocoa butter to or on the surface with consequent white layer or splotch formation. Although tempering (the formation of stable crystals through an extended cooling and slow heating procedure) can help in retarding bloom, bloom remains a recurring problem in the chocolate confection industry. It would be highly desirable to develop cocoa butter substitutes which do not need to be tempered or which require minimal tempering, since the processing costs associated with the production of high quality chocolate could thereby be significantly lowered.

Another disadvantage of cocoa butter is its high caloric content. Although the chemical composition of cocoa butter is distinctly different from that of other natural oils and fats, it is metabolized in an analogous manner and thus contributes substantially to the energy value of a food composition. Because of the desire of many persons to limit their caloric intake for reasons of health or fitness, a cocoa butter substitute having the same melting properties as natural cocoa butter but fewer calories would be of considerable value.

Certain sucrose fatty acid esters have been proposed for use as reduced calorie cocoa butter substitutes, as described, for example, in U.S. Pat. No. 4,822,875 (McCoy et al.) and European Pat. Publication No. 350,981 (Castenmiller et al.).

Reduced calorie food compositions containing fat-type organoleptic ingredients are also known wherein an esterified epoxide-extended polyol is employed as a full or partial replacement for vegetable oils and fats. Fat substitutes of this type are disclosed in U.S. Pat. No. 4,861,613 (White et al.). However, it has not heretofore been known how to modify and adapt such substances so as to render them suitable for use as cocoa butter replacements.

Copending European application 93303950.5, published as EP-A-0571218, describes and claims a reduced calorie food product such as a confectionery product having a fat component, said fat component comprising a fatty acid-esterified propoxylated glycerin composition having an average number of oxypropylene units per equivalent of glycerin of from 3 to 16, a fatty acid acyl group content such that at least 50 mole percent of the fatty acid acyl groups are derived from no more than two different $C_{12}$-$C_{24}$ saturated linear fatty acids, an iodine number less than 30, and a ratio of average number of fatty acid acyl group carbons per equivalent of glycerin to average number of oxypropylene units per equivalent of glycerin such that the composition has a solid fat index as measured by dilatometry of more than 50 at 20°C and less than 10 at 37°C.

The cocoa butter substitutes described therein have a markedly reduced tendency to be digested and absorbed so as to provide energy value when consumed as compared to natural cocoa butter. A confectionery made with such a substitute will consequently have far fewer available calories than an analogous confectionery formulated with an equivalent weight or volume of natural cocoa butter. At the same time, the instant cocoa butter mimetics have

the advantage of being easily synthesized at low cost from readily available and inexpensive starting materials. In addition, these substances are remarkably similar to natural cocoa butter in their melting properties and thus provide chocolate products and other confectioneries having excellent storage and handling characteristics at room temperature as well as satisfactory organoleptic qualities.

We have now found unexpectedly that the texture and consistency of the compositions is still acceptable if the solid fat index at 37°C is 10 or more provided that it is not more than 20.

Compositions having a solid fat index in this higher range have also been found to be somewhat easier to process and handle and provide confectionery products having good firmness and "snap." Such products are quite resistant to deformation and surface marking from time of manufacture to the time of consumption.

Thus, according to the present invention, there is provided a confectionery product having a fat component, said fat component comprising a fatty acid-esterified propoxylated glycerin composition having an average number of oxypropylene units per equivalent of glycerin of from 3 to 16, a fatty acid acyl group content such that at least 50 mole percent of the fatty acid acyl groups are derived from no more than two different $C_{12}$-$C_{24}$ saturated linear fatty acids, an iodine number less than 30, and a ratio of average number of fatty acid acyl group carbons per equivalent of glycerin to average number of oxypropylene units per equivalent of glycerin such that the composition has a solid fat index as measured by dilatometry of more than 50 at 20°C and at least 10 but not more than 20 at 37°C.

Also provided by the invention is a reduced calorie cocoa butter substitute comprised of cocoa butter and at least 25 parts by weight (more preferably, at least 225 parts by weight) per 75 parts by weight cocoa butter of the above-defined fatty acid-esterified propoxylated glycerin composition.

This invention additionally provides a method of reducing the available caloric content of a food product (e.g., a confectionery product such as a chocolate composition) comprised of cocoa butter, said method comprising formulating the food product so as to replace at least a portion (preferably, at least 75 weight percent) of the cocoa butter with said fatty acid-esterified propoxylated glycerin composition. By replacing cocoa butter with the fatty acid-esterified propoxylated glycerin compositions of this invention, caloric reductions of at least 25%, more preferably at least 50%, are attainable.

The invention also provides a fatty acid-esterified propoxylated glycerin composition prepared by reacting 1 equivalent of glycerin with from 3 to 16 equivalents of propylene oxide, preferably under base-catalyzed conditions, to yield a propoxylated glycerin and esterifying the propoxylated glycerin with one or more fatty acids or fatty acid derivatives selected such that the resulting fatty acid-esterified propoxylated glycerin composition has a fatty acid acyl group content wherein at least 50 mole percent of the fatty acid acyl groups are derived from no more than two different $C_{12}$-$C_{24}$ saturated linear fatty acids, an iodine number less than 30, and a solid fat index as measured by dilatometry of more than 50 at 20°C and from at least 10 but not more than 20 at 37°C. Preferably, at least about 80% of the hydroxyl groups of the propoxylated glycerin are esterified.

We have discovered that the cocoa butter substitutes of this invention have other unexpected advantages as compared to natural cocoa butter. The polymorphic instability problems of natural cocoa butter arc avoided by the present cocoa butter substitute. Different kinds of tempering conditions normally encountered by compositions containing cocoa butter, or even the complete lack of tempering, have little effect on the stability of the present cocoa butter substitute. As a result, chocolate bloom may be eliminated if cocoa butter is essentially completely replaced with the present cocoa butter substitute. Tempering may be reduced or avoided altogether, thereby greatly reducing batch times and increasing the productivity of a chocolate processing facility. Preferred confectionery products of this invention reduce visually apparent bloom by at least 90% over multiple (i.e., 3) heating and cooling cycles due to the incorporation of an esterified propoxylated glycerin composition having a unique crystal structure that requires little or no tempering. In fact, some such compositions may be quench cooled without generating unacceptable levels of bloom. Especially preferred embodiments of this invention can withstand fluctuations in temperature that usually give rise to bloom in chocolate confections, thus greatly improving the storage stability of such chocolate confections. The onset of apparent bloom can be substantially delayed (i.e., for at least 1 month, preferably at least 6 months) or prevented altogether.

Another unexpected benefit of the instant invention is that chocolate prepared using the cocoa butter substitutes described herein requires minimal conching (kneading) to impart excellent texture and flavor to the chocolate. As the time required for conching normally ranges from a few hours to several days, this invention effectively expedites the production of high quality chocolate. Chocolate containing the instant cocoa butter substitutes also has been found to cool and set rapidly. The chocolates may be quickıy demolded and packaged, thus further shortening processing times as compared to conventional chocolate processing.

Surprisingly, the cocoa butter substitutes of this invention have also been found to have superior flavor characteristics in certain compositions (especially those containing cocoa powder as an ingredient) as compared to natural cocoa butter. Cocoa butter-based chocolates, unless carefully formulated and processed, often exhibit a clay-like mouthfeel and residual bitterness. The instant esterified propoxylated glycerin compositions tend to impart a cleaner cocoa flavor and exhibit a better release of sweetness than natural cocoa butter. Other desirable properties of the instant cocoa butter substitutes include good mold release, gloss, and snap in chocolate-flavored products, a bland

neutral flavor that allows considerable formulation flexibility, and high stability to oxidation since such substitutes contain minimal levels of unsaturated fatty acid acyl groups.

DETAILED DESCRIPTION OF THE INVENTION:

In order for the fatty acid-esterified propoxylated glycerin compositions of this invention to function effectively as reduced calorie cocoa butter substitutes, it is essential that the solid fat index as measured by dilatometry be more than 50 at 20°C and at least 10 but not more than 20 at 37°C.

As will be explained in more detail subsequently, it has been found that the melting properties of a fatty acid-esterified propoxylated glycerin composition will mimic the desirable melting properties of cocoa butter when the degree of propoxylation and the type and relative proportions of fatty acid acyl groups present are carefully controlled.

The fatty acid-esterified propoxylated glycerin compositions of this invention contain glyceryl residues, oxypropylene units, and fatty acid acyl

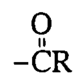

groups. Typically, the compositions are mixtures of individual fatty acid-esterified propoxylated glycerin compounds which may differ from each other in degree of propoxylation and acyl group composition. The glyceryl residue may have the generic structure

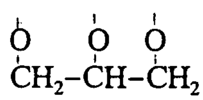

and is derived from glycerin

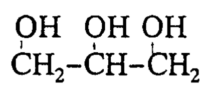

or a glycerin equivalent. The oxypropylene units are generally interspersed between glyceryl residues and the acyl groups and have the structure

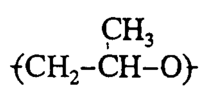 or 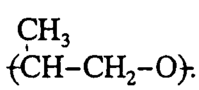.

Typically, more than one oxypropylene unit may be present between an oxygen of an individual glyceryl residue and an acyl group such that a polyoxypropylene unit is created. However, a single "branch" or "arm" of the esterified propoxylated glycerin may contain only one oxypropylene unit. Certain of the acyl groups may be attached directly to the glyceryl residue, without any intervening oxypropylene units, although an average of at least three oxypropylene units per glyceryl residue must be present in the overall composition. The average number of oxypropylene units in the esterified propoxylated glycerin composition is from 3 to 16. The presence of oxypropylene units is critical, as the oxypropylene units help to lower the melting point of the compositions thereby improving the mouthfeel and melting characteristics as compared to analogous compositions not containing oxypropylene units. Surprisingly, even though a number of different molecular species having varying degrees of propoxylation are generally present in the compositions of this invention (i.e., a composition wherein the average number of oxypropylene units per glyceryl is 8 will typically contain substantial proportions of species containing 5, 6, 7, 8, 9, 10, 11, and 12 oxypropylene units), the compositions melt within a remarkably narrow range. That is, the compositions are substantially solid at room temperature and yet melt completely or nearly completely at body temperature, thus closely mimicking the melting behavior of natural cocoa butter. This result was unexpected, since mixtures of organic compounds generally have broad melting ranges. It is highly desirable that the chemical composition of the esterified propoxylated glycerin be selected such that the cocoa butter

replacement exhibits a decrease of at least 40 (more preferably, at least 50) in its solid fat index over the temperature range 20°C to 37°C.

In order to maximize the resistance of the esterified propoxylated glycerin composition towards pancreatic lipase enzyme-catalyzed hydrolysis, the oxypropylene units adjacent to the acyl groups should be oriented such that secondary rather than primary ester linkages are created. That is, the methyl group should be located on the carbon atom attached to the oxygen atom forming part of the ester linkage as follows:

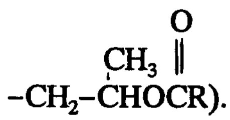

Preferably, at least 80% or 85% of the ester linkages in the overall composition are secondary. Most preferably, at least 95% of the ester linkages are secondary. However, the secondary ester content can be less than 80% without adversely affecting the cocoa butter-like properties of the esterified alkoxylated polyol.

It is desirable for the esterified propoxylated glycerin composition to be substantially esterified such that it has an average of at least 2.5 (more preferably, at least 2.9) fatty acid acyl groups per equivalent of glycerin. The extent of esterification may be readily determined by conventional analytical methods such as hydroxyl number.

The structure of the composition preferably is such that the composition has a porcine pancreatic lipase hydrolysis rate of less than 20% as compared to an olive oil standard. Preferably, the relative hydrolysis rate is less than 10% of the olive oil rate. Methods of measuring porcine pancreatic lipase hydrolysis rate are described in U.S. Pat. No. 4,861,613

The average number of oxypropylene units in the esterified propoxylated glycerin composition must not be so low as to result in a high proportion of the acyl groups being attached directly to glyceryl residues since such directly attached acyl groups will be nearly as susceptible to enzymatic cleavage as the acyl groups in a conventional fully digestible triglyceride, thus reducing the usefulness of the composition as a low calorie fat substitute. At the same time, the average number of oxypropylene units should not exceed 16 since the resulting compounds may be substantially lower in melting point or higher in melt viscosity than natural cocoa butter and thus would not be suitable for use as cocoa butter substitutes.

The solid fat index at 20°C and 37° may be adjusted as needed by varying the average number of oxypropylene units per glycerin (degree of propoxylation) in the composition. At a constant fatty acid acyl group content (i.e., if the relative proportions of the different acyl groups present are fixed), the solid fat index at a particular temperature will increase as the degree of propoxylation is decreased and will decrease as the degree of propoxylation is increased. As the average number of fatty acid acyl group carbons per equivalent of glycerin decreases or as the iodine number of the composition increases (as a result of increasing the proportion of unsaturated fatty acid acyl groups present), the average number of oxypropylene units per glycerin will need to be decreased to maintain the solid fat index at 20°C above the critical value of 50. If a particular fatty acid-esterified propoxylated glycerin composition has an undesirably high solid fat index at 37°C the index may be brought down to or below the critical value of 20 by increasing the degree of propoxylation. By so adjusting the average number of oxypropylene units per equivalent of glycerin, the melting range may be easily controlled so as to mimic that of natural cocoa butter.

The selection of specific structures and proportions of the acyl groups in the esterified propoxylated glycerin compositions of this invention is critical to the capacity of such substances to function as cocoa butter mimetics. It has been unexpectedly discovered that the number of different fatty acid acyl groups must be limited in order to obtain a composition having a suitably sharp melting range. Moreover, the composition must contain a certain minimum proportion of acyl groups derived from $C_{12}$-$C_{24}$ saturated linear fatty acids, as a high content of unsaturated or branched fatty acid acyl groups results in an unacceptable broadening and/or lowering of the melting range. This discovery was unexpected in view of the fact that natural cocoa butter contains a high proportion of oleic acid, an unsaturated fatty acid.

For these reasons, at least 50 mole percent of the fatty acid acyl groups in the esterified propoxylated glycerin composition must be derived from no more than two different $C_{12}$-$C_{24}$ (more preferably, $C_{18}$ -$C_{22}$) saturated linear fatty acids. More preferably, at least 70 mole percent of the acyl groups are so derived. In one embodiment, at least 50 mole percent of the acyl groups are derived from a single $C_{12}$-$C_{24}$ saturated linear fatty acid. "Derived from" in this context means that the acyl group has a long chain hydrocarbyl structure analogous to that present in a $C_{12}$-$C_{24}$ saturated linear fatty acid. As will be explained subsequently, the esterified propoxylated glycerin composition may actually be prepared using either a fatty acid or a fatty acid derivative such as a fatty acid ester, fatty acid halide, or fatty acid anhydride. Generally speaking, it will be desirable to increase the proportion of acyl groups derived from $C_{12}$-$C_{24}$ saturated linear fatty acids as the average number of oxypropylene segments in the composition is increased so as to maintain a solid fat index of 50 or more at 20°C.

In addition, the iodine number (which reflects the proportion of unsaturated fatty acid acyl groups in the composition) must be less than 30, more preferably is less than 20, and most preferably is less than 10 centigrams $I_2$ per gram of the composition. A relatively minor proportion of unsaturated fatty acid acyl groups may be advantageous, however, in order to ensure that the composition does not melt over an excessively narrow range. Iodine number (also referred to as iodine value) may be measured by AOCS method Cd 1-25.

The $C_{12}$-$C_{24}$ saturated fatty acid is linear (i.e., nonbranched) and preferably contains only one carboxylic acid functionality. The acyl group may thus correspond to the general structure

$$-\overset{\displaystyle O}{\overset{\|}{C}}(CH_2)_nCH_3$$

wherein n is an integer of from 10 to 22. The value of n is most conveniently an even number (e.g., 10, 12, 14, 16, 18, 20, or 22) since the corresponding fatty acids are readily available at low cost from natural sources such as edible triglycerides. Specific illustrative fatty acids suitable for use as this component of the esterified propoxylated glycerin compositions include, but are not limited to, lauric acid, myristic acid, stearic acid, palmitic acid, eicosanoic (arachidic) acid, heneicosanoic acid, docosanoic (behenic) acid, tricosanoic acid, and tetracosanoic (lignoceric) acid. Arachidic acid, stearic acid, and behenic acid are especially preferred for use. Mixtures of these $C_{12}$-$C_{24}$ saturated linear fatty acids may also be utilized to advantage, subject to the limitations discussed hereinabove.

While all of the acyl groups in the esterified propoxylated glycerin composition may be derived from $C_{12}$-$C_{24}$ saturated linear fatty acids (provided at least 50 mole percent of the acyl groups are derived from no more than two different acids of this type) the compositions may contain minor amounts of acyl groups derived from other $C_8$-$C_{24}$ fatty acids. Preferably, the proportion of such other acyl groups is less than 40% (more preferably, less than 30%). Generally speaking, the incorporation of acyl groups which are relatively short in length ($C_8$-$C_{18}$), unsaturated, and/or branched will tend to decrease the melting point of the resulting esterified propoxylated glycerin.

The fatty acids which optionally may be used in combination with the required $C_{12}$-$C_{24}$ saturated linear fatty acids may be any of the known unsaturated, branched chain, or short chain fatty acids such as caprylic acid, pelargonic acid, capric acid, oleic acid, cetoleic acid, palmitoleic acid, gadoleic acid, erucic acid, rincinoleic acid, linoleic acid, linolenic acid, myristoleic acid, eleostearic acid, arachidonic acid, or mixtures of these acids. Preferably, monocarboxylic acids containing from 0 to 5 double bonds are employed.

The proportions and chemical structures of the fatty acid acyl groups in the cocoa butter mimetic compositions of this invention should be selected such that the solid fat index as determined by dilatometry is more than 50 (more preferably, more than 60) at 20°C and at least 10 but no more than 20 at 37°C. Increasing the ratio of average number of fatty acid acyl group carbons per equivalent of glycerin to average number of oxypropylene units per equivalent of glycerin will shift the melting range of the composition to a higher temperature while decreasing the ratio will shift the melting range to a lower temperature. The melting curve of the cocoa butter substitute can thus be conveniently matched to that of natural cocoa butter by adjusting this ratio as needed. Of course, where a particular food application requires a fat which has a slightly lower or higher melting range than cocoa butter, the chemical composition of the esterified propoxylated glycerin may be adjusted as desired to attain such modified performance.

The average number of fatty acid acyl group carbons per equivalent of glycerin in the esterified propoxylated glycerin compositions of the invention may be readily calculated from a knowledge of the fatty acid acyl group content (i.e. the chemical structures and relative proportions of the fatty acids used to prepare the compositions). The following formula may be used to calculate this average number for an esterified propoxylated glycerin composition prepared using fatty acids A and B:

$$\frac{\text{moles A x no. carbons in A}}{\text{moles propoxylated glycerin}} + \frac{\text{moles B x no. carbons in B}}{\text{moles propoxylated glycerin}}$$

For example, a composition prepared by reacting a mixture of 1.5 moles of stearic acid (a $C_{18}$ fatty acid) and 1.5 moles of eicosanoic acid (a $C_{20}$ fatty acid) with 1 mole of propoxylated glycerin containing an average of 7 oxypropylene units per glycerin will have an average of 57 fatty acid acyl carbons per equivalent of glycerin.

To minimize the available caloric content of the esterified propoxylated glycerin cocoa butter substitutes of this invention, the chemical composition should be selected such that the number average molecular weight is at least about 750. More preferably, the minimum molecular weight is about 1000. In order for the esterified propoxylated glycerin composition to mimic as closely as possible the physical properties of cocoa butter (such as melt viscosity and hardness) it is also desirable that the average molecular weight not exceed about 2300. Preferably, the molecular weight is below about 2000.

Where the desired objective is to obtain a reduced calorie chocolate product having superior "snap", firmness, and resistance to deformation and surface marking at ambient temperatures, the use of the following type of fat substitute is preferred:

A fatty acid-esterified propoxylated glycerin composition having an average number of oxypropylene units per equivalent of glycerin of from 3 to 7 (more preferably, from 4 to 6), a fatty acid acyl group content such that (a) at least 70 mole percent of the fatty acid acyl groups are derived from no more than two different $C_{18}$-$C_{24}$ saturated linear fatty acids, (b) from 35 to 65 mole percent of the fatty acid acyl groups are stearyl groups, and (c) from 20 to 45 mole percent of the fatty acid acyl groups are behenyl groups, an iodine number less than 10, and a ratio of average number of fatty acid acyl group carbons per equivalent of glycerin (preferably, from 54 to 62) such that the composition has a solid fat index as measured by dilatometry of more that 60 at 20°C and from 10 to 20 at 37°C.

Thus, in accordance with one aspect of the invention, there is provided a chocolate-flavoured confectionery product wherein said fatty-acid esterified propoxylated glycerin composition has an average number of oxypropylene units per equivalent of glycerin of from 4 to 6, a fatty acid group content such (a) that at least 70 mole percent of the fatty acid acyl groups are derived from no more than two different $C_{12}$-$C_{24}$ saturated linear fatty acids and (b) from 45 to 70 mole percent of the fatty acid acyl groups are stearyl groups and from 0 to 35 mole percent of the fatty acid acyl groups are behenyl groups, an iodine number less than 10, and a ratio of average number of fatty acid acyl group carbons per equivalent of glycerin such that the composition has a solid fat index as measured by dilatometry of more than 60 at 20°C.

The invention also provides a chocolate composition comprising (a) a fatty acid-esterified propoxylated glycerin composition having an average number of oxypropylene units per equivalent of glycerin of from 3 to 16, a fatty acid acyl group content such that at least 70 mole percent of the fatty acid acyl groups are derived from no more than two different $C_{12}$-$C_{24}$ saturated linear fatty acids, an iodine number less than 30 and a ratio of average number of fatty acid acyl group carbons per equivalent of glycerin to average number of oxypropylene units per equivalent of glycerin such that the composition has a solid fat index as measured by dilatometry of more than 50 at 20°C and from at least 10 but not more than 20 at 37°C and (b) at least one additional ingredient selected from the group consisting of sugars, water, flavourings, milk solids, emulsifiers, dietary fibres, vitamins, bulking agents, sugar alcohols, lipids, and reduced calorie sweeteners.

The esterified propoxylated glycerin cocoa butter substitutes of this invention may be prepared using any suitable method. In general, the procedures described in the prior art for synthesizing other esterified propoxylated glycerin compositions will be appropriate for use provided that the necessary proportions of $C_{12}$-$C_{24}$ saturated linear fatty acids of fatty acid derivatives are employed in the esterification step. Such procedures are described, for example, in U.S. Pat. Nos. 4,861,613, 4,983,329 and 5,175,323 the teachings of which are incorporated by reference herein in their entirety. A reduced calorie cocoa butter substitute comprising a mixture of esterified propoxylated glycerins in accordance with this invention can be obtained by adaptation or modification of the esterification procedures described in the above-mentioned publications. Thus, a propoxylated glycerin having an appropriate degree of propoxylation is esterified with fatty acid equivalents selected such that at least about 50 mole percent (more preferably, at least about 70 mole percent) of the fatty acid acyl groups in the resulting mixture are derived from no more than two different $C_{12}$-$C_{24}$ saturated linear fatty acids. The remaining fatty acid acyl groups, if any, may be derived from $C_8$-$C_{24}$ fatty acids other than $C_{12}$-$C_{24}$ saturated linear fatty acids. As is explained in more detail in the above-mentioned U.S. patents, either fatty acids or fatty acid equivalents such as fatty acid esters, fatty acid halides, or fatty acid anhydrides may actually be employed in the esterification. The $C_{12}$-$C_{24}$ saturated linear fatty acid acyl groups may also be introduced by using $C_{12}$-$C_{24}$ unsaturated fatty acids in the esterification step and then hydrogenating the esterified propoxylated glycerin composition to increase the proportion of $C_{12}$-$C_{24}$ saturated linear fatty acid acyl groups to the desired level. Any residual free fatty acid remaining in the composition after esterification should preferably be removed or reduced as much as possible to minimize problems with off flavor, off-odor, or storage stability.

Fatty acid-esterified propoxylated glycerin compositions suitable for use in accordance with the present invention may also be conveniently obtained by separately synthesizing two or more different fatty acid-esterified propoxylated glycerin compositions and then blending, mixing, or otherwise combining such individual compositions in the proportions necessary to achieve the desired structural characteristics and SFI properties. For example, a confectionery formulation may be readily optimized by preparing one relatively high-melting esterified propoxylated glycerin composition and a second relatively low-melting esterified propoxylated glycerin composition and then using varying proportions of the two compositions as a substitute for cocoa butter in the confectionery formulation until the optimum characteristics for a particular end-use application are attained.

The fatty acid-esterified propoxylated glycerin compositions of the present invention are particularly suitable for use as full or partial replacements for cocoa butter in confectionery products such as chocolate. Typically, a chocolate is comprised of 20 to 55 weight percent (more preferably, 25 to 40 weight percent) of a fat component. To achieve

a significant reduction in available caloric content, it will generally be desirable for at least 25 weight percent of the fat component to be a fatty-acid esterified propoxylated glycerin composition of this invention. The amount of the cocoa butter substitute may, if desired, constitute up to 100%, e.g. essentially all, of the total fat in the confectionery product. The balance of the fat component may be cocoa butter or a different cocoa butter substitute, equivalent or mimetic (e.g., illipe butter derivatives, sucrose polyester, caprenin, or the like), or some other natural or synthetic lipid. These lipids may be introduced either directly in pure form or as components of food ingredients such as chocolate liquor or cocoa powder containing cocoa butter or milk solids containing milk fats. In a preferred embodiment, a chocolate composition highly resistant to blooming (i.e., one not requiring tempering) and which does not need to be conched to achieve a fine chocolate flavor and texture may be prepared which is comprised of from 20 to 50 weight percent (more preferably, 25 to 40 weight percent) of a fat component with the balance being at least one additional ingredient selected from sugars, water, flavourings, milk solids, emulsifiers, dietary fibres, bulking agents, vitamins, bulking agents, sugar alcohols, and reduce calorie sweeteners. The fat component is itself comprised of at least 75 weight percent of the esterified propoxylated glycerin composition, up to 25 weight percent of cocoa butter, and up to 25 weight percent milk fat. Preferably, the amount of cocoa butter and milk fat are both less than 15 weight percent. Suitably, the fatty acid-esterified propoxylated glycerin composition has an average number of oxypropylene units per equivalent of glycerin of from 3 to 16, a fatty acid acyl group content such that at least 70 mole percent of the fatty acid acyl groups are derived from no more than two different $C_{12}$-$C_{24}$ saturated linear fatty acids, an iodine number less than 30 and a ratio of average number of fatty acid acyl group carbons per equivalent of glycerin to average number of oxypropylene units per equivalent of glycerin such that the composition has a solid fat index as measured by dilatometry of more than 50 at 20°C and from at least 10 but not more than 20 at 37°C with a decrease in solid fat index of at least 40 over the temperature range 20°C to 37°C.

Surprisingly, the fatty acid-esterified propoxylated glycerin compositions of this invention are remarkably compatible with natural cocoa butter and may be blended in any proportion with cocoa butter without adversely affecting the melting characteristics of the cocoa butter. Where a significant fraction (e.g., over 25% by weight) of the blend is cocoa butter, some tempering and/or conching may be desirable to attain optimum appearance and taste in the final food product.

In addition to the fat component comprised of the fatty acid-esterified propoxylated glycerin composition, the food product may further comprise one or more conventional food, confectionery, or chocolate ingredients such as sugars (e.g., sucrose, fructose, glucose, maltose), water, flavourings such as cocoa powder, chocolate liquor, cocoa mass, vanilla or nut or fruit flavourings, milk solids (non-fat, skimmed, or whole), emulsifiers such as lecithin, antioxidants, dietary fibers, vitamins (especially fat soluble vitamins such as vitamin A, D, E. and K), bulking or bodying agents (e.g., polydextrose, lactitol, isomalt, isomaltulose, polyglucose, polymaltose, carboxymethylcellulose, carboxyethylcellulose, arabinogalactan microcrystalline cellulose or modified starch), salt, and the like. Any fat present in ingredients such as cocoa powder, milk solids, or chocolate liquour is considered part of the fat component. A sugar alcohol such as sorbitol, xylitol, or mannitol or a reduced calorie sweetener such as saccharine, aspartame, cyclamates, sucralose, acesulfame, acesulfam-K, or the like may also be employed in combination with the esterified propoxylated glycerin composition of the invention.

Food products in accordance with the invention may be readily prepared by replacing the cocoa butter component of a standard formulation with the fatty acid-esterified propoxylated glycerin cocoa butter mimetics described hereinabove using known processing methods and techniques. Such methods are described, for example, in Zoumas et al., "Chocolate and Cocoa", Encyclopedia of Chemical Technology, Vol. 5, pp 1-19 (1979) and Minifie, Chocolate, Cocoa and Confectionery Science and Technology, Avi Publishing Co. (1970). In general, one part of the fatty acid-esterified propoxylated glycerin composition may directly substitute for one part of cocoa butter in such formulations.

The composition of the present invocation are particularly useful in the preparation of milk chocolate and sweet (dark) chocolate. Chocolate coatings for use on baked goods such as cookies, cakes, doughnuts, pastries, cupcakes may also be readily formulated. The fatty acid-esterified propoxylated glycerin cocoa butter substitute may additionally be utilized in enrobing compositions. Any of the conventional methods for using chocolate compositions to produce a variety of confections and candies can be employed. Such methods include, for example, molding (the casting of liquid chocolate into molds followed by cooling and demolding to yield a solid block, hollow shell, or a shell filled with a confectionery material such as fondant, fudge, or caramel), enrobing (coating confectionery centers with chocolate by putting the centers through a curtain of liquid chocolate followed by cooling), or panning (wherein a rotating pan is used such that the confectionery centers rotate and cascade over one another while the chocolate is applied by hand or spray during rotation and is set by cooling air applied to the revolving pan). A chocolate composition comprised of the fatty acid-esterified propoxylated glycerin composition may be tempered or seeded as needed to achieve the desired mouthfeel and stability.

To illustrate the effect of the average number of oxypropylene units per equivalent of glycerin on the melting characteristics of fatty acid-esterified propoxylated glycerin compositions, the following series of such compositions were synthesized by reacting stearic acid

$$[HO\overset{O}{\overset{\|}{C}}(CH_2)_{16}CH_3]$$

with different propoxylated glycerin compositions using the procedures described in U. S. Pat. No. 4,983,329. The average number of oxypropylene units per equivalent of glycerin was varied from 0 to 16. In each case, the reaction was carried out until essentially all of the hydroxyl groups of the propoxylated glycerin had been esterified. The solid fat index of each composition at certain temperatures was measured by dilatometry and is shown in Table I below. The melting profile of each composition is illustrated in Figure 1.

TABLE I

| Experiment No. | Ave. No. PO/Glycerin[1] | Acyl Carbon/PO[2] | Dilatometric Solid Fat Index 10.0°C | 21.1°C | 26.7°C | 33.3°C | 40.0°C |
|---|---|---|---|---|---|---|---|
| 1 | 3 | 18 | 82.3 | 81.4 | 80.2 | 74.1 | 0.1 |
| 2 | 4 | 13.5 | 79.6 | 78.0 | 76.2 | 60.5 | 0.1 |
| 3 | 5 | 10.8 | 75.0 | 72.0 | 67.5 | 0.1 | 0.0 |
| 4 | 8 | 6.8 | 66.3 | 58.0 | 0.2 | 0.0 | 0.0 |
| 5 | 16 | 3.4 | 6.4 | 0.2 | 0.0 | 0.0 | 0.0 |
| 6 | Cocoa Butter | -- | 69.0 | 58.2 | 43.9 | 0.8 | 0.3 |
| 7 | 0 | 0 | | | did not melt | | |

[1] average number of oxypropylene units per equivalent of glycerin

[2] average number of fatty acid acyl group carbons divided by the average number of oxypropylene units per equivalent of glycerin

The following runs demonstrate the effect of changing the ratio of fatty acid acyl group carbons per glycerin to oxypropylene units per glycerin on the melting profile of an esterified propoxylated glycerin composition. The composition of Experiment 8 employed a propoxylated glycerin containing an average of about 8 oxypropylene groups per equivalent of glycerin which was reacted with a mixture of 1 part of 85% behenic acid/15% stearic acid blend and 1 part of stearic acid (sufficient fatty acid was used to accomplish essentially complete esterification of the propoxylated glycerin). In Experiment 9, 3 parts of the 85% behenic acid/15% stearic acid blend and 1 part of the stearic acid were utilized. As may be seen from Table II, increasing the average chain length of the fatty acid acyl groups shifted the melting range of the composition to a higher temperature. This shift in melting range was sufficient such that the Experiment 9 composition would not be suitable for use as a cocoa butter substitute owing to its overly high solid fat index at 37°. However, the composition could readily be modified to more closely mimic the physical properties of cocoa butter by slightly increasing the average number of oxypropylene units per glycerin so as to lower the melting range. For example, this could be accomplished by increasing the average number of oxypropylene units per glycerin from 8 to 8.7.

Table II

| | | Dilatometric Solid Fat Index | | | | |
|---|---|---|---|---|---|---|
| Experiment No. | Acyl Carbons/PO[1] | 10.0°C | 21.1°C | 26.7°C | 33.3°C | 40.0°C |
| 4 | 6.8 | 66.3 | 58.0 | 0.2 | 0 | 0 |
| 8 | 7.4 | 74.2 | 68.38 | 60.6 | 28 | 0.2 |
| 9 | 7.7 | 82.8 | 75.3 | 71.3 | 49.5 | 16.5 |

1 average number of fatty acid acyl group carbons divided by the average number of oxypropylene units per equivalent of glycerin

The following examples further illustrate the cocoa butter mimetics and food compositions of this invention, but are not limitative of the invention in any manner whatsoever.

EXAMPLES 1-2

These examples demonstrate the preparation of esterified propoxylated glycerin compositions having a dilatometric solid fat index at 37°C of between 10 and 20 which are useful for the formulation of reduced calorie chocolate products having improved "snap", firmness, and resistance to deformation and surface marking at ambient temperatures.

Two esterified propoxylated glycerin compositions in accordance with the present invention were prepared by reacting a propoxylated glycerin containing an average of about 5 oxypropylene units per equivalent of glycerin with mixtures of hydrogenated high erucic acid rapeseed oil fatty acids (fatty acid source A) and hydrogenated canola oil fatty acids (fatty acid source B) using the esterification methods of U.S. Pat. No. 4,983,392 (sufficient fatty acid was used to accomplish essentially complete esterification of the propoxylated glycerin).

These compositions exhibited the fatty acid acyl group distributions and dilatometric solid fat index values shown in Table IV. The compositions are expected to be well-suited for use in milk chocolate and dark chocolate products such as those described in Examples 19-23 of EP-A-0571218.

TABLE IV

| Ex. No. | Fatty Acid Source, % | | Fatty Acid Acyl Group Distribution, % | | | | | | Dilatometric Solid Fat Index | | | | | |
|---|---|---|---|---|---|---|---|---|---|---|---|---|---|---|
| | A | B | $C_{14:0}$ | $C_{16:0}$ | $C_{18:0}$ | $C_{18:1}$ | $C_{20:0}$ | $C_{22:0}$ | 10.0°C | 21.1°C | 26.7°C | 33.3°C | 37°C | 40.0°C |
| 1 | 80 | 20 | 0.7 | 6.19 | 50.68 | 1.01 | 7.8 | 31.38 | 76.7 | 70.4 | 65.4 | 40.8 | 10.8 | <0.1 |
| 2 | 85 | 15 | 0.61 | 5.74 | 49.76 | 0.18 | 8.43 | 33.0 | off-scale | 86.3 | 66.9 | 45.5 | 17.5 | <0.1 |

## Claims

1. A confectionery product having a fat component, said fat component comprising a fatty acid-esterified propoxylated glycerin composition having an average number of oxypropylene units per equivalent of glycerin of from 3 to 16, a fatty acid acyl group content such that at least 50 mole percent of the fatty acid acyl groups are derived from no more than two different $C_{12}$-$C_{24}$ saturated linear fatty acids, an iodine number less than 30, and a ratio of average number of fatty acid acyl group carbons per equivalent of glycerin to average number of oxypropylene units per equivalent of glycerin such that the composition has a solid fat index as measured by dilatometry of more than 50 at 20°C and at least 10 but not more than 20 at 37°C.

2. The confectionery product of claim 1 wherein the fatty acid-esterified propoxylated glycerin composition has an iodine number less than 10.

3. The confectionery product of claim 1 or claim 2 wherein at least 70 mole percent of the fatty acid acyl groups are derived from no more than two different $C_{12}$-$C_{24}$ saturated linear fatty acids.

4. The confectionery product of any preceding claim wherein the $C_{12}$-$C_{24}$ saturated linear fatty acids are selected from the group consisting of lauric acid, myristic acid, palmitic acid, stearic acid, eicosanoic acid, heneicosanoic acid, tricosanoic acid behenic acid, and lignoceric acid.

5. The confectionery product of any preceding claim wherein the fatty acid-esterified propoxylated glycerin composition has a porcine pancreatic lipase hydrolysis rate of below 20% compared to olive oil.

6. The confectionery product of any preceding claim wherein the fatty acid-esterified propoxylated glycerin composition has an average of at least 2.5 fatty acid acyl groups per equivalent of glycerin.

7. The confectionery product of any preceding claim wherein at least 80 percent of the fatty acid acyl groups of the fatty acid-esterified propoxylated glycerin composition are bonded to oxypropylene units through a secondary ester linkage.

8. The confectionery product of any preceding claim wherein said fatty acid-esterified propoxylated glycerin composition comprises at least 25% by weight of said fat component.

9. The confectionery product of claim 8 wherein said fat component consists essentially of said fatty acid-esterified propoxylated glycerin composition.

10. The confectionery product of any preceding claim wherein said confectionery product is chocolate-flavored.

11. The confectionery product of any preceding claim wherein said fat component is additionally comprised of cocoa butter.

12. The confectionery product of any preceding claim additionally comprising at least one ingredient selected from the group consisting of sugars, water, flavorings, milk solids, emulsifiers, dietary fibers, vitamins, bulking agents, sugar alcohols, and reduced calorie sweeteners.

13. The confectionery product of any preceding claim wherein the solid fat index decreases by at least 50 over the temperature range 20°C to 37°C.

14. The confectionery product of any preceding claim wherein at least 70 mole percent of the fatty acid acyl groups are derived from no more than two different $C_{18}$-$C_{22}$ saturated linear fatty acids.

15. The confectionery product of claim 14 wherein said two different $C_{18}$-$C_{22}$ saturated linear fatty acids are selected from stearic acid, arachidic acid and behenic acid.

16. A confectionery product as claimed in claim 1 which is chocolate flavored and wherein said fatty acid-esterified propoxylated glycerin composition has an average number of oxypropylene units per equivalent of glycerin of from 4 to 6, a fatty acid acyl group content such that (a) at least 70 mole percent of the fatty acid acyl groups are derived from no more than two different $C_{12}$-$C_{24}$ saturated linear fatty acids and (b) from 45 to 70 mole percent of the fatty

acid acyl groups are stearyl groups and from 0 to 35 mole percent of the fatty acid acyl groups are behenyl groups, an iodine number less than 10, and a ratio of average number of fatty acid acyl group carbons per equivalent of glycerin such that the composition has a solid fat index as measured by dilatometry of more than 60 at 20°C.

**17.** A chocolate composition comprising (a) a fatty acid-esterified propoxylated glycerin composition having an average number of oxypropylene units per equivalent of glycerin of from 3 to 16, a fatty acid acyl group content such that at least 70 mole percent of the fatty acid acyl groups are derived from no more than two different $C_{12}$-$C_{24}$ saturated linear fatty acids, an iodine number less than 30 and a ratio of average number of fatty acid acyl group carbons per equivalent of glycerin to average number of oxypropylene units per equivalent of glycerin such that the composition has a solid fat index as measured by dilatometry of more than 50 at 20°C and from at least 10 but not more than 20 at 37°C and (b) at least one additional ingredient selected from the group consisting of sugars, water, flavorings, milk solids, emulsifiers, dietary fibers, vitamins, bulking agents, sugar alcohols, lipids, and reduced calorie sweeteners.

**18.** A chocolate composition highly resistant to blooming comprising (a) from 25 to 40 weight % of a fat component comprising (i) at least 75 weight % of a fatty acid-esterified propoxylated glycerin composition having an average number of oxypropylene units per equivalent of glycerin of from 3 to 16, a fatty acid acyl group content such that at least 70 mole percent of the fatty acid acyl groups are derived from no more than two different $C_{12}$-$C_{24}$ saturated linear fatty acids, an iodine number less than 30 and a ratio of average number of fatty acid acyl group carbons, per equivalent of glycerin to average number of oxypropylene units per equivalent of glycerin such that the composition has a solid fat index as measured by dilatometry of more than 50 at 20°C and from at least 10 but not more than 20 at 37°C with a decrease in solid fat index of at least 40 over the temperature range 20°C to 37°C, (ii) up to 25 weight % cocoa butter, and (iii) up to 25% weight milk fat, and (b) at least one additional ingredient selected from sugars, water, flavorings, milk solids, emulsifiers, dietary fibers, bulking agents, vitamins, sugar alcohols, and reduced calorie sweeteners.

**19.** A reduced calorie cocoa butter substitute comprising cocoa butter and at least 25 parts by weight per 75 parts by weight cocoa butter of a fatty acid-esterified propoxylated glycerin composition having an average number of oxypropylene units per equivalent of glycerin of from 3 to 16, a fatty acid acyl group content such that at least 50 mole percent of the fatty acid acyl groups are derived from no more than two different $C_{12}$-$C_{24}$ saturated linear fatty acids, an iodine number less than 30, and a ratio of average number of fatty acid acyl group carbons per equivalent of glycerin to average number of oxypropylene units per equivalent of glycerin such that the composition has a solid fat index as measured by dilatometry of more than 50 at 20°C and at least 10 but not more than 20 at 37°C.

**20.** A method of reducing the available caloric content of a chocolate composition of cocoa butter and rendering said chocolate composition highly resistant to blooming, said method comprising replacing at least 75 weight percent of cocoa butter with a fatty acid-esterified propoxylated glycerin composition having an average number of oxypropylent units per equivalent of glycerin of from 3 to 16, a fatty acid acyl group content such that at least 50 mole percent of the fatty acid acyl groups are derived from no more than two different $C_{12}$-$C_{24}$ saturated linear fatty acids, an iodine number less than 30, and a ratio of average number of fatty acid acyl group carbons per equivalent of glycerin to average number of oxypropylene units per equivalent of glycerin such that the composition has a solid fat index as measured by dilatometry of more than 50 at 20°C and from 10 but not more than 20 at 37°C.

**Patentansprüche**

**1.** Süßwarenprodukt mit einer Fettkomponente, die eine mit Fettsäure veresterte propoxylierte Glycerinzusammensetzung mit einer durchschnittlichen Anzahl von 3 bis 16 Oxypropyleneinheiten pro Glycerinäquivalent enthält, einen solchen Gehalt an Fettsäureacylgruppen aufweist, daß mindestens 50 Mol-% der Fettsäureacylgruppen von nicht mehr als zwei verschiedenen gesättigten linearen $C_{12}$-$C_{24}$-Fettsäuren abgeleitet sind, eine Iodzahl von weniger als 30 hat und das Verhältnis der durchschnittlichen Anzahl von Fettsäureacylgruppenkohlenstoffen pro Glycerinäquivalent zur durchschnittlichen Anzahl der Oxypropyleneinneiten pro Glycerinäquivalent so ist, daß die Zusammensetzung einen durch Dilatometrie gemessenen Index von festem Fett von mehr als 50 bei 20°C und mindestens 10, aber nicht mehr als 20 bei 37°C hat.

**2.** Süßwarenprodukt nach Anspruch 1, bei dem die mit Fettsäure veresterte propoxylierte Glycerinzusammensetzung eine Iodzahl von weniger als 10 hat.

**3.** Süßwarenprodukt nach Anspruch 1 oder 2, in dem mindestens 70 Mol-% der Fettsäureacylgruppen von nicht mehr

als zwei verschiedenen gesättigten linearen $C_{12}$-$C_{24}$-Fettsäuren abgeleitet sind.

4. Süßwarenprodukt nach einem der vorstehenden Ansprüche, in dem die gesättigten linearen $C_{12}$-$C_{24}$-Fettsäuren aus Laurinsäure, Myristinsäure, Palmitinsäure, Stearinsäure, Eicosansäure, Heneicosansäure, Tricosansäure, Behensäure und Lignocerinsäure ausgewählt werden.

5. Süßwarenprodukt nach einem der vorstehenden Ansprüche, in dem die mit Fettsäure veresterte propoxylierte Glycerinzusammensetzung im Vergleich zu Olivenöl eine Hydrolysegeschwindigkeit der Pankreaslipase vom Schwein von weniger als 20 % aufweist.

6. Süßwarenprodukt nach einem der vorstehenden Ansprüche, in dem die mit Fettsäure veresterte propoxylierte Glycerinzusammensetzung durchschnittlich mindestens 2,5 Fettsäureacylgruppen pro Glycerinäquivalent aufweist.

7. Süßwarenprodukt nach einem der vorstehenden Ansprüche, in dem mindestens 80 % der Fettsäureacylgruppen der mit Fettsäure veresterten propoxylierten Glycerinzusammensetzung durch eine sekundäre Esterbindung an die Oxypropyleneinheiten gebunden sind.

8. Süßwarenprodukt nach einem der vorstehenden Ansprüche, in dem die mit Fettsäure veresterte propoxylierte Glycerinzusammensetzung mindestens 25 Gew.-% der Fettkomponente ausmacht.

9. Süßwarenprodukt nach Anspruch 8, in dem die Fettkomponente im wesentlichen aus der mit Fettsäure veresterten propoxylierten Glycerinzusammensetzung besteht.

10. Süßwarenprodukt nach einem der vorstehenden Ansprüche, das ein Schokokoladenaroma aufweist.

11. Süßwarenprodukt nach einem der vorstehenden Ansprüche, in dem die Fettkomponente außerdem aus Kakaobutter besteht.

12. Süßwarenprodukt nach einem der vorstehenden Ansprüche, das zusätzlich mindestens einen Bestandteil aus der Gruppe Zucker, Wasser, Aromastoffe, feste Milchprodukte, Emulgatoren, Ballaststoffe, Vitamine, Mittel zur Erhöhung des Volumens, Zuckeralkohole und Süßstoffe mit verringertem Kaloriengehalt umfaßt.

13. Süßwarenprodukt nach einem der vorstehenden Ansprüche, in dem der Index festen Fettes über den Temperaturbereich von 20 bis 37°C um mindestens 50 abnimmt.

14. Süßwarenprodukt nach einem der vorstehenden Ansprüche, in dem mindestens 70 Mol-% der Fettsäureacylgruppen von nicht mehr als zwei verschiedenen gesättigten linearen $C_{18}$-$C_{22}$-Fettsäuren abgeleitet sind.

15. Süßwarenprodukt nach Anspruch 14, in dem zwei verschiedene gesättigte lineare $C_{18}$-$C_{22}$-Fettsäuren aus Stearinsäure, Arachidinsäure und Behensäure ausgewählt werden.

16. Süßwarenprodukt nach Anspruch 1, das nach Schokolade schmeckt und in dem die mit Fettsäure veresterte propoxylierte Glycerinzusammensetzung eine durchschnittliche Anzahl von 4 bis 6 Oxypropyleneinheiten pro Glycerinäquivalent aufweist, einen solchen Gehalt an Fettsäureacylgruppen hat, daß (a) mindestens 70 Mol-% der Fettsäureacylgruppen von nicht mehr als zwei verschiedenen gesättigten linearen $C_{12}$-$C_{24}$-Fettsäuren abgeleitet sind und (b) 45 bis 70 Mol der Fettsäureacylgruppen Stearylgruppen und 0 bis 35 Mol-% der Fettsäureacylgruppen Behenylgruppen sind, die Iodzahl weniger als 10 beträgt und das Verhältnis der durchschnittlichen Anzahl der Fettsäureacylgruppenkohlenstoffe pro Glycerinäquivalent so ist, daß die Zusammensetzung einen durch Dilatometrie gemessenen Index festen Fettes von mehr als 60 bei 20°C hat.

17. Schokoladenzusammensetzung, umfassend (a) eine mit Fettsäure veresterte propoxylierte Glycerinzusammensetzung mit einer durchschnittlichen Anzahl von 3 bis 16 Oxypropyleneinheiten pro Glycerinäquivalent, einem solchen Gehalt an Fettsäureacylgruppen, daß mindestens 70 Mol-% der Fettsäureacylgruppen von nicht mehr als zwei verschiedenen gesättigten linearen $C_{12}$-$C_{24}$-Fettsäuren abgeleitet sind, einer Iodzahl von weniger als 30 und einem solchen Verhältnis der durchschnittlichen Anzahl von Fettsäureacylgruppenkohlenstoffen pro Glycerinäquivalent zur durchschnittlichen Anzahl der Oxypropyleneinheiten pro Glycerinäquivalent, daß die Zusammensetzung einen durch Dilatometrie gemessenen Index von festem Fett von mehr als 50 bei 20°C und mindestens 10, aber

nicht mehr als 20 bei 37°C hat, und (b) mindestens einen zusätzlichen Bestandteil, der aus der Gruppe Zucker, Wasser, Aromastoffe, feste Milchprodukte, Emulgatoren, Ballaststoffe, Vitamine, Mittel zur Erhöhung des Volumens, Zuckeralkohole, Lipide und Süßstoffe mit verringertem Kaloriengehalt ausgewählt wird.

**18.** Schokoladenzusammensetzung, die besonders beständig gegen Anlaufen ist, umfassend (a) 25 bis 40 Gew.-% einer Fettkomponente umfassend (i) mindestens 75 Gew.-% einer mit Fettsäure veresterten propoxylierten Glycerinzusammensetzung mit einer durchschnittlichen Anzahl von 3 bis 16 Oxypropyleneinheiten pro Glycerinäquivalent, einem solchen Gehalt an Fettsäureacylgruppen, daß mindestens 70 Mol-% der Fettsäureacylgruppen von nicht mehr als zwei verschiedenen gesättigten linearen $C_{12}$-$C_{24}$-Fettsäuren abgeleitet sind, einer Iodzahl von weniger als 30 und einem solchen Verhältnis der durchschnittlichen Anzahl von Fettsäureacylgruppenkohlenstoffen pro Glycerinäquivalent zur durchschnittlichen Anzahl der Oxypropyleneinheiten pro Glycerinäquivalent, daß die Zusammensetzung einen durch Dilatometrie gemessenen Index von festem Fett von mehr als 50 bei 20°C und mindestens 10, aber nicht mehr als 20 bei 37°C hat, wobei der Index festen Fettes über den Temperaturbereich von 20 bis 37°C um mindestens 40 abnimmt, (ii) bis zu 25 Gew.-% Kakaobutter und (iii) bis zu 25 Gew.-% Milchfett, und (b) mindestens einen zusätzlichen Bestandteil, der aus der Gruppe Zucker, Wasser, Aromastoffe, feste Milchprodukte, Emulgatoren, Ballaststoffe, Vitamine, Mittel zur Erhöhung des Volumens, Zuckeralkohole, und Süßstoffe mit verringertem Kaloriengehalt ausgewählt wird.

**19.** Kakaobutterersatz mit verringertem Kaloriengehalt, umfassend Kakaobutter und mindestens 25 Gewichtsteile einer mit Fettsäure veresterten propoxylierten Glycerinzusammensetzung mit einer Durchschnittszahl von 3 bis 16 Oxypropyleneinheiten pro Glycerinäquivalent auf 75 Gewichtsteile Kakaobutter, einem solchen Gehalt an Fettsäureacylgruppen, daß mindestens 50 Mol-% der Fettsäureacylgruppen von nicht mehr als zwei verschiedenen gesättigten linearen $C_{12}$-$C_{24}$-Fettsäuren abgeleitet sind, einer Iodzahl von weniger als 30 und einem solchen Verhältnis der Durchschnittszahl der Fettsäureacylgruppenkohlenstoffe pro Glycerinäquivalent zur Durchschnittszahl der Oxypropyleneinheiten pro Glycerinäquivalent, daß die Zusammensetzung einen durch Dilatometrie gemessenen Index festen Fettes von mehr als 50 bis 20°C und mindestens 10, aber nicht mehr als 20 bei 37°C aufweist.

**20.** Verfahren zur Verringerung des zur Verfügung stehenden Kaloriengehalts einer Schokoladenzusammensetzung aus Kakaobutter und dazu, diese Schokoladenzusammensetzung besonders beständig gegen Anlaufen zu machen, durch Ersetzen von mindestens 75 Gew.-% der Kakaobutter durch eine mit Fettsäure veresterte propoxylierte Glycerinzusammensetzung mit einer Durchschnittszahl von 3 bis 16 Oxypropyleneinheiten pro Glycerinäquivalent, einem solchen Gehalt an Fettsäureacylgruppen, daß mindestens 50 Mol-% der Fettsäureacylgruppen von nicht mehr als zwei verschiedenen gesättigten linearen $C_{12}$-$C_{24}$-Fettsäuren abgeleitet sind, einer Iodzahl von weniger als 30 und einem solchen Verhältnis der Durchschnittszahl der Fettsäureacylgruppenkohlenstoffe pro Glycerinäquivalent zur Durchschnittszahl der Oxypropyleneinheiten pro Glycerinäquivalent, daß die Zusammensetzung einen durch Dilatometrie gemessenen Index festen Fettes von mehr als 50 bis 20°C und mindestens 10, aber nicht mehr als 20 bei 37°C aufweist.

## Revendications

**1.** Produit de confiserie ayant un constituant gras, ledit constituant gras comprenant une composition de glycérol propoxylé et estérifié par des acides gras, ayant un nombre moyen d'unités d'oxypropylène par équivalent de glycérol de 3 à 16, une teneur en groupes acyle d'acides gras telle qu'au moins 50 % en mol des groupes acyle d'acides gras dérivent d'au plus deux acides gras linéaires saturés en $C_{12}$-$C_{24}$ différents, un indice d'iode inférieur à 30, et un rapport du nombre moyen de carbones de groupes acyle d'acides gras par équivalent de glycérol au nombre moyen d'unités d'oxypropylène par équivalent de glycérol tel que la composition a un indice de graisse solide, mesuré par dilatométrie, de plus de 50 à 20°C et d'au moins 10, mais d'au plus 20 à 37°C.

**2.** Produit de confiserie selon la revendication 1, dans lequel la composition de glycérol propoxylé et estérifié par des acides gras a un indice d'iode inférieur à 10.

**3.** Produit de confiserie selon la revendication 1 ou la revendication 2, dans lequel au moins 70 % en mol des groupes acyle d'acides gras dérivent d'au plus deux acides gras linéaires saturés en $C_{12}$-$C_{24}$ différents.

**4.** Produit de confiserie selon l'une quelconque des revendications précédentes, dans lequel les acides gras linéaires saturés en $C_{12}$-$C_{24}$ sont choisis dans le groupe constitué par l'acide laurique, l'acide myristique, l'acide palmitique, l'acide stéarique, l'acide eicosanoïque, l'acide hénéicosanoïque, l'acide tricosanoïque, l'acide béhénique et l'acide lignocérique.

5. Produit de confiserie selon l'une quelconque des revendications précédentes, dans lequel la composition de glycérol propoxylé et estérifié par des acides gras a un taux d'hydrolyse par la lipase pancréatique porcine inférieur à 20 % de celui de l'huile d'olive.

6. Produit de confiserie selon l'une quelconque des revendications précédentes, dans lequel la composition de glycérol propoxylé et estérifié par des acides gras a en moyenne 2,5 groupes acyle d'acides gras par équivalent de glycérol.

7. Produit de confiserie selon l'une quelconque des revendications précédentes, dans lequel au moins 80 % des groupes acyle d'acides gras de la composition de glycérol propoxylé et estérifié par des acides gras sont liés à des unités d'oxypropylène par une liaison ester secondaire.

8. Produit de confiserie selon l'une quelconque des revendications précédentes, dans lequel la composition de glycérol propoxylé et estérifié par des acides gras comprend au moins 25 % en masse dudit constituant gras.

9. Produit de confiserie selon la revendication 8, dans lequel ledit constituant gras est constitué essentiellement par ladite composition de glycérol propoxylé et estérifié par des acides gras.

10. Produit de confiserie selon l'une quelconque des revendications précédentes, dans lequel ledit produit de confiserie est aromatisé au chocolat.

11. Produit de confiserie selon l'une quelconque des revendications précédentes, dans lequel ledit constituant gras comprend en outre du beurre de cacao.

12. Produit de confiserie selon l'une quelconque des revendications précédentes, comprenant en outre au moins un ingrédient choisi dans le groupe constitué par des sucres, de l'eau, des arômes, des produits solides dérivés du lait, des émulsionnants, des fibres alimentaires, des vitamines, des diluants, des alcools de sucres et des édulcorants à teneur réduite en calories.

13. Produit de confiserie selon l'une quelconque des revendications précédentes, dans lequel l'indice de graisse solide diminue d'au moins 50 dans l'intervalle de température de 20°C à 37°C.

14. Produit de confiserie selon l'une quelconque des revendications précédentes, dans lequel au moins 70 % en mol des groupes acyle d'acides gras dérivent d'au plus deux acides gras linéaires saturés en $C_{18}$-$C_{22}$ différents.

15. Produit de confiserie selon la revendication 14, dans lequel lesdits deux acides gras linéaires saturés en $C_{18}$-$C_{22}$ différents sont choisis parmi l'acide stéarique, l'acide arachidique et l'acide béhénique.

16. Produit de confiserie selon la revendication 1, qui est aromatisé au chocolat et dans lequel ladite composition de glycérol propoxylé et estérifié par des acides gras a un nombre moyen d'unités d'oxypropylène par équivalent de glycérol de 4 à 6, une teneur en groupes acyle d'acides gras telle que (a) au moins 70 % en mol des groupes acyle d'acides gras dérivent d'au plus deux acides gras linéaires saturés en $C_{12}$-$C_{24}$ différents et (b) de 45 à 70 % en mot des groupes acyle d'acides gras sont des groupes stéaryle et de 0 à 35 % en mot des groupes acyle d'acides gras sont des groupes béhényle, un indice d'iode inférieur à 10, et un rapport du nombre moyen de carbones de groupes acyle d'acides gras par équivalent de glycérol tel que la composition a un indice de graisse solide, mesuré par dilatométrie, supérieur à 60 à 20°C.

17. Composition de chocolat comprenant (a) une composition de glycérol propoxylé et estérifié par des acides gras, ayant un nombre moyen d'unités d'oxypropylène par équivalent de glycérol de 3 à 16, une teneur en groupes acyle d'acides gras telle qu'au moins 70 % en moi des groupes acyle d'acides gras dérivent d'au plus deux acides gras linéaires saturés en $C_{12}$-$C_{24}$ différents, un indice d'iode inférieur à 30, et un rapport du nombre moyen de carbones de groupes acyle d'acides gras par équivalent de glycérol au nombre moyen d'unités d'oxypropylène par équivalent de glycérol tel que la composition a un indice de graisse solide, mesuré par dilatométrie, de plus de 50 à 20°C et d'au moins 10, mais d'au plus 20 à 37°C, et (b) au moins un ingrédient supplémentaire choisi dans le groupe constitué par des sucres, de l'eau, des arômes, des produits solides dérivés du lait, des émulsionnants, des fibres alimentaires, des vitamines, des diluants, des alcools de sucres, des lipides et des édulcorants à teneur réduite en calories.

18. Composition de chocolat très résistante au ressuage, comprenant (a) 25 à 40 % en masse d'un constituant gras comprenant (i) au moins 75 % en masse d'une composition de glycérol propoxylé et estérifié par des acides gras, ayant un nombre moyen d'unités d'oxypropylène par équivalent de glycérol de 3 à 16, une teneur en groupes acyle d'acides gras telle qu'au moins 70 % en mol des groupes acyle d'acides gras dérivent d'au plus deux acides gras linéaires saturés en $C_{12}$-$C_{24}$ différents, un indice d'iode inférieur à 30, et un rapport du nombre moyen de carbones de groupes acyle d'acides gras par équivalent de glycérol au nombre moyen d'unités d'oxypropylène par équivalent de glycérol tel que la composition a un indice de graisse solide, mesuré par dilatométrie, de plus de 50 à 20°C et d'au moins 10, mais d'au plus 20 à 37°C, avec une diminution de l'indice de graisse solide d'au moins 40 dans l'intervalle de température de 20°C à 37°C, (ii) jusqu'à 25 % en masse de beurre de cacao et (iii) jusqu'à 25 % en masse de matières grasses du lait, et (b) au moins un ingrédient supplémentaire choisi parmi des sucres, de l'eau, des arômes, des produits solides dérivés du lait, des émulsionnants, des fibres alimentaires, des diluants, des vitamines, des alcools de sucres et des édulcorants à teneur réduite en calories.

19. Substitut de beurre de cacao à teneur réduite en calories, comprenant du beurre de cacao et au moins 25 parties en masse pour 75 parties en masse de beurre de cacao d'une composition de glycérol propoxylé et estérifié par des acides gras, ayant un nombre moyen d'unités d'oxypropylène par équivalent de glycérol de 3 à 16, une teneur en groupes acyle d'acides gras telle qu'au moins 50 % en mol des groupes acyle d'acides gras dérivent d'au plus deux acides gras linéaires saturés en $C_{12}$-$C_{24}$ différents, un indice d'iode inférieur à 30, et un rapport du nombre moyen de carbones de groupes acyle d'acides gras par équivalent de glycérol au nombre moyen d'unités d'oxypropylène par équivalent de glycérol tel que la composition a un indice de graisse solide, mesuré par dilatométrie, de plus de 50 à 20°C et d'au moins 10, mais d'au plus 20 à 37°C.

20. Procédé pour réduire la teneur en calories disponible d'une composition de chocolat à base de beurre de cacao et pour rendre ladite composition de chocolat très résistante au ressuage, ledit procédé comprenant le remplacement d'au moins 75 % en masse du beurre de cacao par une composition de glycérol propoxylé et estérifié par des acides gras, ayant un nombre moyen d'unités d'oxypropylène par équivalent de glycérol de 3 à 16, une teneur en groupes acyle d'acides gras telle qu'au moins 50 % en mol des groupes acyle d'acides gras dérivent d'au plus deux acides gras linéaires saturés en $C_{12}$-$C_{24}$ différents, un indice d'iode inférieur à 30, et un rapport du nombre moyen de carbones de groupes acyle d'acides gras par équivalent de glycérol au nombre moyen d'unités d'oxypropylène par équivalent de glycérol tel que la composition a un indice de graisse solide, mesuré par dilatométrie, de plus de 50 à 20°C et d'au moins 10, mais d'au plus 20 à 37°C.

FIG-1

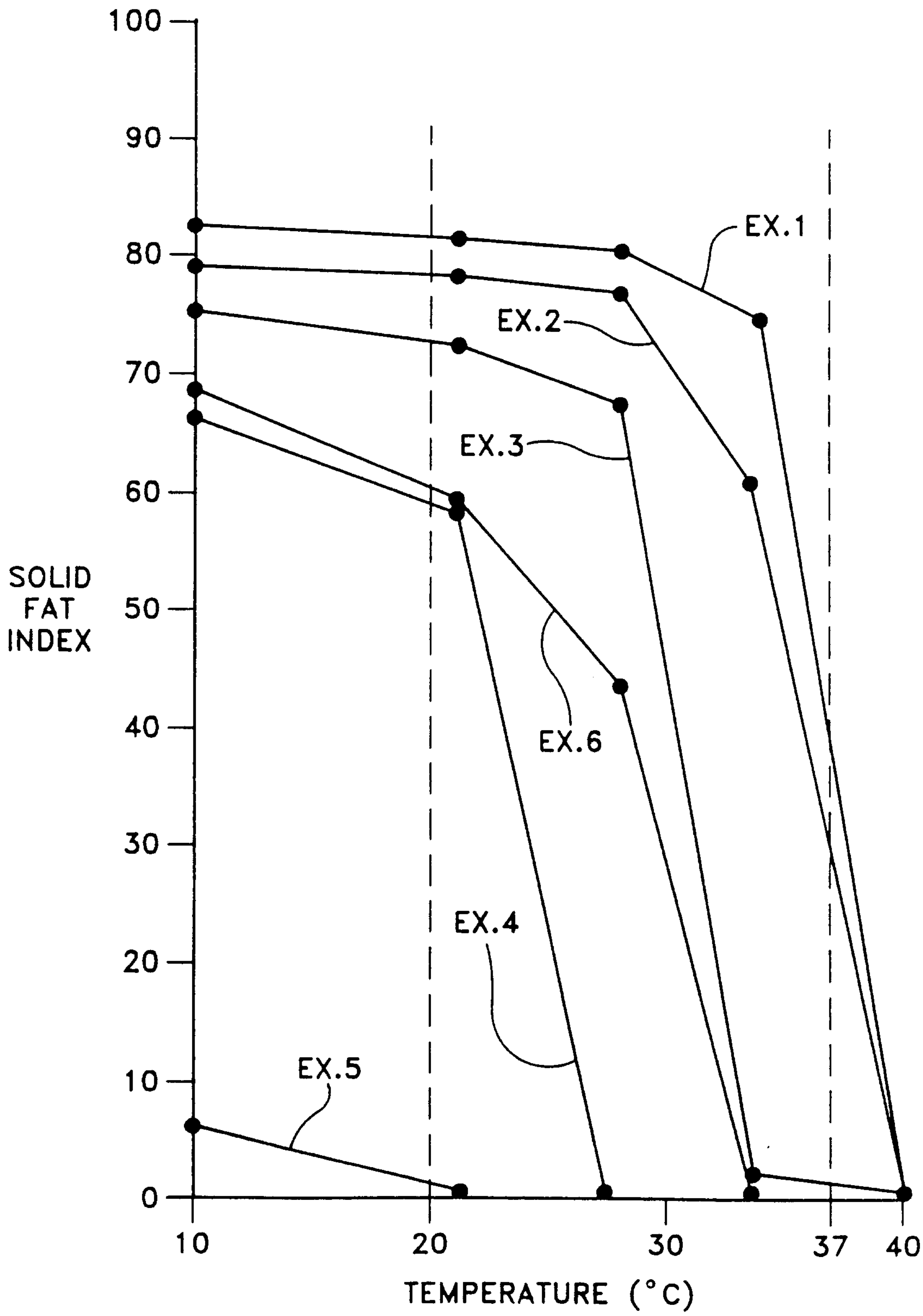
100
90
80
70
60
50
40
30
20
10
0
SOLID
FAT
INDEX
10
20
30
37
40
TEMPERATURE (°C)
EX.1
EX.2
EX.3
EX.4
EX.5
EX.6